(19) Europäisches Patentamt
European Patent Office
Office européen des brevets

(11) **EP 3 112 095 A1**

(12) **DEMANDE DE BREVET EUROPEEN**

(43) Date de publication:
**04.01.2017 Bulletin 2017/01**

(51) Int Cl.:
***B25J 9/16*** (2006.01)

(21) Numéro de dépôt: **16176906.2**

(22) Date de dépôt: **29.06.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **30.06.2015 FR 1556147**

(71) Demandeur: **STAUBLI FAVERGES**
**74210 Faverges (FR)**

(72) Inventeur: **BONNET DES TUVES, Jean-Michel**
**74210 Saint Ferréol (FR)**

(74) Mandataire: **Lavoix**
**62, rue de Bonnel**
**69448 Lyon Cedex 03 (FR)**

(54) **PROCÉDÉ DE COMMANDE D'UNE CELLULE DE TRAVAIL AUTOMATISÉE**

(57) L'invention concerne un procédé de commande d'une cellule de travail automatisée (2) comportant au moins un bras de robot (4) avec au moins trois degrés de liberté (A1-A6), un contrôleur logique programmable (6) adapté pour élaborer un ordre de trajectoire (Om) sur la base d'une instruction de réalisation d'une trajectoire d'une application programmée dans le contrôleur logique programmable, un contrôleur de robot (10), adapté pour piloter le mouvement du bras de robot (4) et un bus de communication (5) entre le contrôleur logique programmable (6) et le contrôleur de robot (10). Le procédé comprend des étapes consistant à a) élaborer, dans le contrôleur logique programmable (6), un ordre de trajectoire (Om) comportant des paramètres de réalisation d'une trajectoire définie au moins entre un point de départ et un point d'arrivée ; b) transmettre l'ordre de trajectoire (Om) élaboré à l'étape a) à une unité de calcul (11) du contrôleur de robot (10); c) élaborer, dans l'unité de calcul (11) du contrôleur de robot (10) et sur la base de l'ordre de trajectoire (Om) transmis à l'étape b), des instructions de mouvement élémentaires pour le pilotage du bras de robot (4) sur la trajectoire définie par l'ordre de trajectoire (Om).

FIG.1

EP 3 112 095 A1

**Description**

L'invention concerne un procédé de commande d'une cellule de travail automatisée.

Il est connu de WO-A-2012/097834 de commander un robot à partir d'un contrôleur logique programmable (PLC) relié au contrôleur de robot par un bus de terrain. Plus particulièrement, il est connu d'utiliser au niveau du PLC des programmes de commande d'un robot comprenant des blocs de fonction qui correspondent à des segments de mouvement d'une trajectoire du robot. Ces blocs sont interprétés par une interface de contrôleur robot qui génère les commandes de mouvement interprétables par le contrôleur robot et les transmet par le bus. Dans le mode de réalisation préférentiel, les commandes de mouvements viennent constituer la queue de mouvement du contrôleur robot.

Cette solution permet d'utiliser les fonctionnalités du PLC pour programmer le robot lui-même. Chaque bloc de fonction est programmable à partir d'une interface standard du PLC par un opérateur qui n'a pas besoin de maîtriser le langage de programmation spécifique au robot. L'inconvénient de ce système est que le PLC doit présenter une interface de contrôleur robot spécifique au robot.

JP-A-2011/062798 divulgue une solution de programmation des mouvements du robot au niveau du PLC dans laquelle des adresses mémoires sont attribuées chacune à une commande robot et le contenu de cette mémoire définit un paramètre de cette commande. Par exemple, l'adresse 10500 correspond à un ordre de mouvement. Lorsque la valeur stockée à cette adresse est 1, la nature de la commande de mouvement est un MOV. Cette solution s'avère fastidieuse à programmer du fait du nombre important de commandes à transmettre.

C'est à ces inconvénients qu'entend remédier l'invention en proposant un procédé de commande d'une cellule de travail automatisée amélioré par rapport aux procédés de l'état de la technique.

A cet effet, l'invention concerne un procédé de commande d'une cellule de travail automatisée comportant :

- au moins un bras de robot avec au moins trois degrés de liberté,
- un contrôleur logique programmable adapté pour élaborer un ordre de trajectoire sur la base d'une instruction de réalisation d'une trajectoire d'une application programmée dans le contrôleur logique programmable,
- un contrôleur de robot, adapté pour piloter le mouvement du bras de robot, et
- un bus de communication entre le contrôleur logique programmable et le contrôleur de robot.

Le procédé est caractérisé en ce qu'il comprend les étapes suivantes :

a) élaborer, dans le contrôleur logique programmable, un ordre de trajectoire comportant des paramètres de réalisation d'une trajectoire définie au moins entre un point de départ et un point d'arrivée;
b) transmettre l'ordre de trajectoire élaboré à l'étape a) à une unité de calcul du contrôleur de robot;
c) élaborer, dans l'unité de calcul du contrôleur de robot et sur la base de l'ordre de trajectoire transmis à l'étape b), des instructions de mouvement élémentaires pour le pilotage du bras de robot sur la trajectoire définie par l'ordre de trajectoire.

Grâce à l'invention, les commandes transmises par le PLC sont moins nombreuses, ce qui accélère l'exécution de la trajectoire. La programmation du PLC est simplifiée car elle ne nécessite pas l'entrée de données spécifiques au bras de robot et aux mouvements effectués par le bras de robot au cours de l'exécution de l'application.

Selon des aspects avantageux mais non obligatoires de l'invention, un tel procédé peut incorporer une ou plusieurs des caractéristiques suivantes, prises dans toute combinaison techniquement admissible :

- Dans l'ordre de trajectoire élaboré à l'étape a), la trajectoire est définie par une référence à un ensemble de points prédéfinis enregistrés dans une mémoire du contrôleur de robot, cette référence étant renseignée dans une variable contenue dans l'ordre de trajectoire.
- Dans l'ordre de trajectoire élaboré à l'étape a), des paramètres cinématiques à utiliser pour la réalisation de la trajectoire sont définis.
- Les paramètres cinématiques à utiliser pour la réalisation de la trajectoire sont définis par une référence à des paramètres cinématiques enregistrés dans une mémoire du contrôleur de robot et renseignés dans une variable contenue dans l'ordre de trajectoire.
- Dans l'ordre de trajectoire élaboré à l'étape a), des paramètres de départ du premier point de la trajectoire et/ou d'approche du dernier point de la trajectoire, qui sont mis en oeuvre par le contrôleur de robot dans la réalisation de la trajectoire, sont définis.
- Les paramètres de départ du premier point de la trajectoire et/ou d'approche du dernier point de la trajectoire sont définis par une référence à des paramètres de départ et d'approche enregistrés dans une mémoire du contrôleur de robot et renseignés dans des variables contenues dans l'ordre de trajectoire.
- L'ordre de trajectoire élaboré à l'étape a) comprend des actions à réaliser par un outil équipant une extrémité du bras de robot.

- Dans l'ordre de trajectoire élaboré à l'étape a), la géométrie de l'outil à utiliser est définie.
- La géométrie de l'outil à utiliser est définie par une référence à une géométrie d'outil prédéfinie enregistrée dans une mémoire du contrôleur de robot, cette référence étant renseignée dans une variable contenue dans l'ordre de trajectoire.
- L'ordre de trajectoire élaboré à l'étape a) comprend des actions à réaliser par un outil équipant une extrémité du bras de robot, et le déclenchement d'une action de l'outil par le contrôleur de robot et des conditions de déclenchement de cette action sont renseignés dans une variable contenue dans l'ordre de trajectoire.
- Les conditions de déclenchement de l'action de l'outil consistent à observer l'état d'avancée d'un mouvement du bras de robot et à déclencher l'action de l'outil lorsque l'état d'avancée du mouvement atteint une valeur prédéfinie.
- A l'étape a), le contrôleur logique programmable met à jour des entrées/sorties de ce contrôleur logique programmable en fonction des paramètres de réalisation de la trajectoire suivant un protocole d'échange défini, et à l'étape b), l'unité de calcul du contrôleur de robot lit des entrées/sorties de l'unité de calcul qui correspondent aux entrées/sorties du contrôleur logique programmable dans le cadre de ce protocole d'échange.

L'invention sera mieux comprise et d'autres avantages de celle-ci apparaîtront plus clairement à la lumière de la description qui va suivre d'un procédé de commande conforme à son principe, faite à titre d'exemple non limitatif en référence aux dessins annexés dans lesquels :

- la figure 1 est un schéma d'une cellule de travail automatisée mettant en oeuvre un procédé conforme à l'invention ;
- la figure 2 est une trajectoire de déplacement effectuée lors d'un cycle de fonctionnement du procédé conforme à l'invention;
- la figure 3 est un schéma bloc du fonctionnement du procédé conforme à l'invention;
- la figure 4 est une variante de la trajectoire de déplacement de la figure 2.

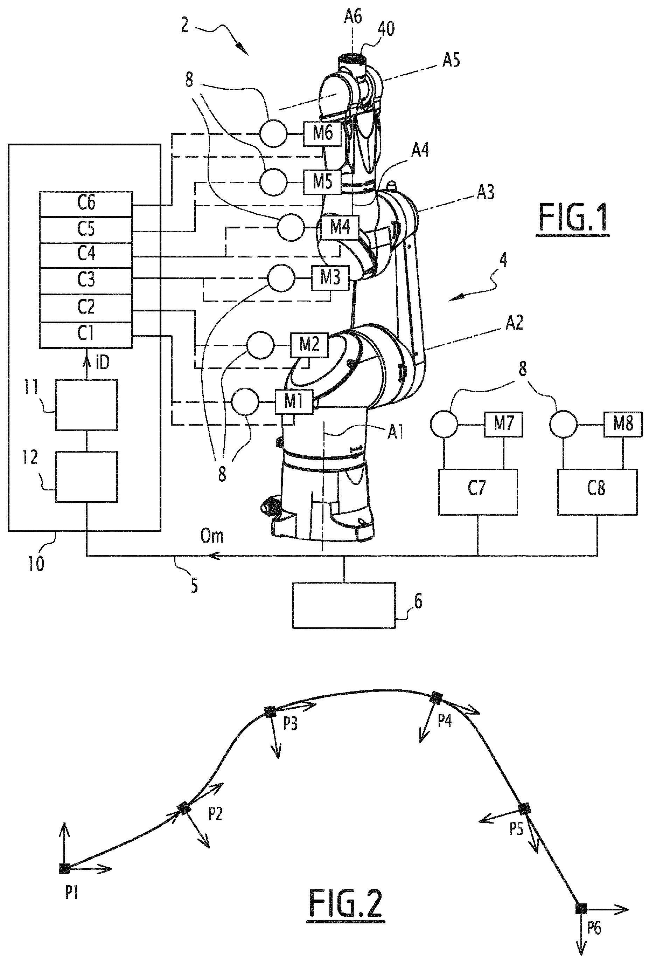

Le procédé de commande conforme à l'invention s'applique à une cellule de travail automatisée 2 représentée sur la figure 1 et comprenant au moins un bras de robot 4 à six degrés de liberté A1, A2, A3, A4, A5 et A6 correspondant aux axes articulaires du bras de robot 4. Le bras de robot 4 comprend également des moteurs M1 à M6 permettant respectivement de manoeuvrer les parties du bras de robot 4 selon les axes A1 à A6.

Le bras de robot 4 comprend également un outil 40 ou « effecteur » situé à une extrémité du bras de robot 4.

Cette cellule de travail automatisée 2 comprend également un contrôleur logique programmable 6 (ci-après PLC) assurant la commande du procédé et qui contient une unité de calcul et des mémoires, connectées à l'unité de calcul, dans lesquelles des séquences d'actions requises pour la réalisation du procédé automatisé sont stockées sous forme de programmes également appelés applications.

La cellule de travail automatisée 2 comprend un contrôleur de robot 10 contenant une unité de calcul 11 apte à exécuter des programmes de commande du bras de robot 4. De préférence, l'unité de calcul 11 est adaptée pour exécuter des programmes écrits en langage VAL 3. En variante, l'unité de calcul 11 peut être adaptée pour exécuter des programmes écrits dans d'autres types de langages.

L'unité de calcul 11 du contrôleur de robot 10 assure la génération de mouvements à partir d'ordres de mouvement, c'est-à-dire le calcul des positions articulaires à atteindre pour chacun des six axes A1 à A6 en appliquant le modèle cinématique associé au bras de robot 4, puis le calcul des positions à atteindre pour chaque moteur M1 à M6 en tenant compte des réductions et des couplages éventuels. Les ordres de mouvement successifs sont stockés dans une pile de mouvements. En variante, l'unité de calcul 11 peut ne pas comprendre de pile de mouvements et être adaptée pour connaître deux ordres de mouvement, correspondant au mouvement présent que l'unité de calcul 11 doit mettre en oeuvre, et au mouvement suivant.

Le contrôleur de robot 10 comprend, pour chaque moteur M1 à M6, un contrôleur de moteur respectif C1 à C6 adapté pour générer les courants d'alimentation dans les phases du moteur M1 à M6 correspondant en fonction de l'information de position angulaire qui lui provient d'un codeur 8 équipant chaque moteur M1 à M6 et qui mesure la position angulaire de ce moteur et la transmet au contrôleur de moteur.

Le PLC 6 et le contrôleur de robot 10 sont connectés par un bus de terrain 5 qui permet l'échange d'informations booléennes et numériques disponibles sous forme d'entrées/sorties. Ces informations sont codées et décodées par des « drivers » respectifs du PLC 6 et du contrôleur de robot 10. A chaque instant, les entrées/sorties de l'unité de calcul du PLC 6 et les entrées/sorties du contrôleur de robot 10 sont identiques.

Le contrôleur de robot 10 est équipé d'une carte de communication 12 par laquelle il se connecte à la fois au bus de terrain 5 et à un bus interne PCI non représenté sur lequel une carte qui supporte l'unité de calcul 11 est également connectée.

La structure de la zone d'échange du bus de terrain 5 est connue de l'unité de calcul du PLC 6 et du contrôleur de robot 10, et le bus de terrain 5 établit un protocole d'échange qui permet notamment à une application de l'unité de calcul du PLC 6 d'envoyer des ordres de trajectoire.

Dans l'exemple représenté, la cellule de travail 2 comprend deux contrôleurs de moteurs C7 et C8 adaptés pour contrôler des moteurs M7 et M8 permettant de manoeuvrer des dispositifs d'alimentation et d'évacuation en pièces du procédé automatisé. Ces moteurs M7 et M8 sont également équipés de codeurs 8. Les contrôleurs de moteur C7 et C8 sont reliés au PLC 6 et au contrôleur de robot 10 par le bus de terrain 5.

Conformément à l'invention, à chaque opération, l'unité de calcul du PLC 6 envoie un ordre de trajectoire Om au contrôleur de robot 10 par le bus de terrain 5. Les ordres de trajectoire Om correspondent à la réalisation d'un mouvement qui cumule des mouvements élémentaires d'un point à un autre. Autrement dit, les ordres de trajectoire Om désignent des trajectoires regroupant un ensemble de points. Les coordonnées articulaires ou les coordonnées cartésiennes correspondant aux points sont stockées dans une mémoire du contrôleur de robot 10 qui est accessible par l'unité de calcul 11 du contrôleur de robot 10. Grâce à cette nouvelle méthode, il n'est pas nécessaire de les transférer vers le PLC 6 pour pouvoir exécuter le programme de fonctionnement de la cellule 2.

Les points d'une trajectoire peuvent être enregistrés dans la mémoire du contrôleur de robot 10 au cours d'une procédure d'apprentissage. A l'aide d'un contrôleur d'apprentissage, ou « teach pendant », non représenté, connecté au contrôleur de robot 10, un opérateur déplace manuellement le bras de robot 4 sur les points de définition de la trajectoire et enregistre ces points dans la mémoire du contrôleur de robot 10.

Les ordres de trajectoire Om émis par le PLC 6 comprennent des variables qui sont renseignées lors de l'élaboration des ordres de trajectoire Om. Le langage VAL 3 dispose d'une notion de liste de variables. Une liste permet de stocker un nombre indéterminé de variables dans un seul élément du langage. Les variables peuvent être enregistrées suivant un type déterminé qui correspond à une structure de données. Par exemple, une variable de type « POINT » regroupe six réels correspondant chacun à un degré de liberté. Une variable de type « TOOLS » regroupe des paramètres de description de l'outil 40 tels que la transformation géométrique qui relie le référentiel de base au référentiel de l'effecteur, le numéro du signal électrique permettant son pilotage ou son temps de réaction. Une variable de type « MDESCS » regroupe des paramètres cinématiques tels que la vitesse, l'accélération, ou le mode de lissage.

A partir de ces possibilités, le programmeur de la cellule de travail 2 crée, dans une mémoire du contrôleur de robot 10 une base de données 15 incluant les éléments suivants :

- une table « POINTS » 151 qui contient N listes de variables de type « Point », N étant le nombre maximum de trajectoires référencées ;
- une table « TOOLS » 152 qui contient M variables de type « Tools », M étant le nombre maximum de géométries d'outils référencées ;
- une table « MDESCS » 153 qui contient K variables de type « Mdesc », K étant le nombre maximum de jeux de paramètres cinématiques référencés.

Ces données sont initialisées par l'installateur conformément aux besoins de son application. La table « POINTS » 151 est programmée de préférence en langage VAL 3 sous forme d'un tableau à deux dimensions de points. La première dimension est l'identificateur d'une trajectoire. La deuxième dimension est l'identification d'un point dans une trajectoire. Les points peuvent être renseignés en coordonnées cartésiennes ou bien en coordonnées articulaires, c'est-à-dire rapportées aux axes A1 à A6. La table « TOOLS » 152 comprend les informations relatives aux outils utilisés dans les applications programmées dans le PLC 6. Les tables 151, 152 et 153 représentent des emplacements de la mémoire du contrôleur de robot 10. En variante, chacune des tables 151, 152 et 153 peut être programmée dans une zone mémoire dédiée.

Pour programmer la réalisation d'une trajectoire du bras de robot 4, le programmeur du PLC 6 utilise une seule instruction de déplacement comprenant les références aux variables de la base de données qui définissent la trajectoire désirée. Par instruction, on désigne une étape du programme qui est interprétée ou compilée par un processeur qui va exécuter cette instruction avant de passer à l'instruction suivante. Par exemple en langage ST (Structured Text), une instruction pour déclencher la réalisation d'une trajectoire peut être exprimée sous la forme d'une instruction MOVE avec quatre paramètres numériques, écrite de la façon suivante :

$$MOVE\ (i,n,m,k)$$

Où :

- la variable i peut prendre les valeurs 0, 1 et 2 et détermine le type de trajectoire à utiliser (0 : articulaire, 1 : Linéaire, 2 : Circulaire) ;
- la variable n (entre 0 et N) référence les points de trajectoire à utiliser ;

- la variable m (entre 0 et M) référence la géométrie de l'outil 40 à utiliser ;
- la variable k (entre 0 et K) référence les paramètres cinématiques à utiliser.

Lors de l'exécution de l'instruction MOVE, l'unité de calcul du PLC 6 copie les valeurs des quatre paramètres de l'instruction MOVE dans les sorties correspondantes telles qu'elles sont définies dans le protocole d'échanges entre le PLC 6 et le contrôleur de robot 10. Après transmission par le bus de terrain 5, les sorties sont rendues disponibles comme des entrées dans le contrôleur de robot 10. Ces entrées sont interprétées dans l'unité de calcul 11 par un programme serveur écrit de préférence en langage VAL 3 qui élabore à son tour des instructions de mouvement élémentaires iME correspondantes pour l'extrémité du bras de robot 4. L'unité de calcul du PLC 6 transmet ainsi un ordre de trajectoire Om qui correspond à une instruction de réalisation d'une trajectoire du programme de commande du procédé. L'unité de calcul 11 détermine les déplacements élémentaires à réaliser pour effectuer la trajectoire spécifiée dans l'ordre de trajectoire Om et calculer des instructions de déplacement iD correspondantes pour chacun des moteurs M1 à M6 du bras de robot 4.

Par exemple, dans le langage VAL 3, les instructions de mouvement élémentaires iME de l'extrémité du bras de robot 4 sont construites sous la forme unique suivante:

$$MOVEX\ (Point,\ Tool,\ Mdesc)$$

Où « X » correspond au type de mouvement utilisé et peut prendre les valeurs J (mouvement articulaire), L (mouvement linéaire) ou C (mouvement circulaire), « Point » est la destination du mouvement, « Tool » décrit la géométrie de l'outil 40 qui est présent sur le bras de robot 4, et « Mdesc » est une structure de données qui contient tous les paramètres cinématiques nécessaires pour définir un mouvement, incluant entre autres la vitesse, l'accélération, la décélération, le lissage des valeurs.

Dans le cas d'un mouvement circulaire, une instruction de mouvement élémentaire iME doit spécifier au moins deux points.

Par exemple, pour chaque ordre de trajectoire Om correspondant à une trajectoire linéaire du bras de robot 4 transmis par le PLC 6, l'unité de calcul 11 va déterminer puis exécuter une séquence d'instructions, contenant des instructions de mouvement élémentaires iME, qui peut être exprimée de la façon suivante, en langage VAL 3:

$$POUR\ index = 0\ A\ NombreDeVariablesDans(POINTS[n])$$

$$MOVEL\ (POINTS[n]\ [index],\ TOOLS[m],\ MDESCS[o])$$

*FIN_POUR*

Les séquences d'instructions de mouvement élémentaires iME correspondant aux types de mouvement articulaire ou circulaire sont construites de façon similaire.

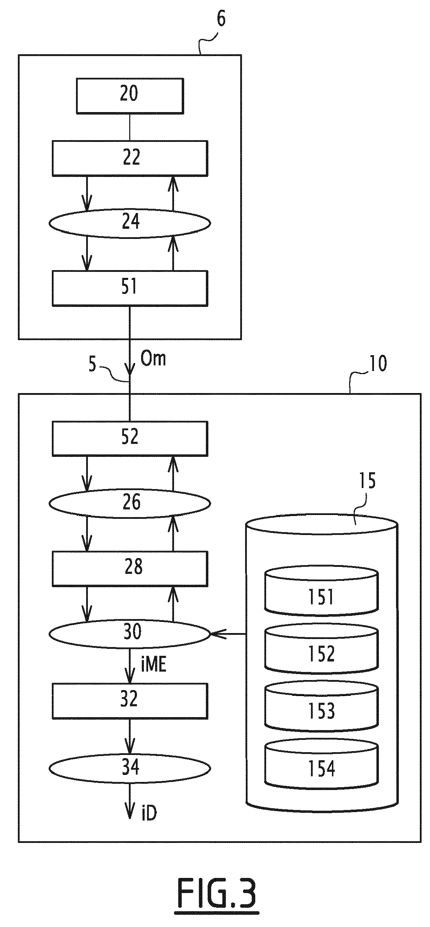

La figure 3 illustre le protocole de traitement d'un ordre de trajectoire Om élaboré par le PLC 6. Sur la base d'une instruction de réalisation d'une trajectoire du programme de commande du procédé ou application 20, le PLC 6 génère un ordre de trajectoire Om qui consiste à renseigner les entrées/sorties 22 avec les références aux données de trajectoire à utiliser dans la base de données 15. Ces références sont:

- l'index de la trajectoire désirée dans la banque des points de trajectoires 151,
- l'index du descripteur de mouvement à utiliser dans la banque des descripteurs de mouvement 152,
- l'index de l'outil à utiliser dans la banque des outils 153.

Les entrées/sorties 22 contenant l'ordre de trajectoire sont envoyées vers une borne d'entrée 51 du bus de terrain 5 par un programme de communication 24 ou « driver ».

A son arrivée dans le contrôleur de robot 10 par une borne de sortie 52 du bus de terrain 5, l'ordre de trajectoire est transformé par un programme de communication 26 ou « driver » et envoyé dans l'unité de calcul 11 sous forme d'entrées/sorties 28.

L'unité de calcul 11 inclut un programme serveur 30 écrit en VAL 3 qui interprète les entrées/sorties 28 suivant le protocole défini et génère la suite d'instructions de mouvements élémentaires correspondant à l'ordre de trajectoire Om en récupérant les caractéristiques de la trajectoire dans la base de données 15. Les instructions de mouvements élémentaires iME issues de l'ordre de trajectoire Om stockées dans une pile d'instructions 32 puis sont traitées les unes après les autres par un générateur de trajectoire 34 qui calcule les instructions de déplacement iD. Les instructions de déplacements iD pour chacun des moteurs M1 à M6 sont calculées en mettant en oeuvre un modèle cinématique des transmissions du bras de robot 4, qui définit les éventuels couplages ou rapports de réduction entre les différentes parties du bras du robot 4. Les instructions de déplacement iD sont transmises à chacun des contrôleurs de moteur C1 à C6 qui génèrent les courants de contrôle des moteurs M1 à M6.

L'invention permet notamment de mettre en oeuvre une application de prise et de déplacement d'objets, ou « pick and place », qui consiste à répéter un cycle dans lequel une pièce est prise à un point P1 et emmenée à un point P6 en passant par une suite de points P2 à P5 pour y être posée, le bras de robot 4 retournant ensuite au point P1 pour pouvoir recommencer le cycle, comme cela est représenté à la figure 2.

Cette application est mise en oeuvre par le PLC 6 dont l'unité de calcul va exécuter un programme qui contient une suite d'opérations de déplacements du bras de robot 4 et d'actions de l'outil 40. Pour une application de « pick and place », l'outil 40 est généralement une ventouse pneumatique.

Pour la réalisation de l'application de « pick and place », l'unité de calcul du PLC 6 effectue en boucle les opérations suivantes :

> *(début de la boucle)*
> *Déclencher la prise de la pièce*
> *Déclencher la réalisation de la trajectoire du bras de robot de P1 à P6*
> *Déclencher la libération de la pièce*
> *Déclencher la réalisation de la trajectoire du bras de robot de P6 à P*1
> *(fin de boucle)*

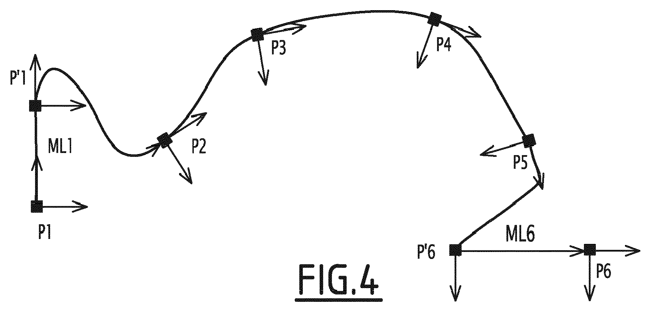

Selon un aspect optionnel de l'invention représenté à la figure 4, dans une application de « pick and place », il est avantageux de suivre un mouvement déterminé pour quitter le premier point P1 de la trajectoire et un mouvement déterminé pour accoster le point final P6 de la trajectoire. Généralement ces mouvements sont des mouvements d'extraction de la pièce à déplacer au départ de la trajectoire et d'insertion de la pièce à l'approche du dernier point de la trajectoire. Ces mouvements sont réalisés par une translation pure, par exemple pour l'insertion et/ou l'extraction, éventuellement combinée avec une rotation si un vissage ou un dévissage est nécessaire.

Les mouvements d'approche et de départ sont en général propres au processus automatisé : ils dépendent des pièces manipulées et des supports qui les reçoivent. Pour réaliser cette spécificité, des paramètres supplémentaires associés à une commande de trajectoire sont à disposition du programmeur du PLC 6. Ces paramètres supplémentaires peuvent être exprimés de la façon suivante :

- Tdepart correspond à une référence sur une transformation géométrique de la base de données du contrôleur de robot 10. Cette transformation géométrique est à appliquer au premier point P1 de la trajectoire pour définir un point de départ P'1.
- mdescDepart correspond à une référence sur un descripteur de mouvement de la base de données du contrôleur de robot 10. Il définit les paramètres cinématiques à utiliser pour la trajectoire de départ s'étendant entre les points P1 et P'1.
- Tappro correspond à une référence sur une transformation géométrique de la base de données du contrôleur de robot 10. Cette transformation géométrique est à appliquer au dernier point P6 de la trajectoire pour définir un point d'approche P'6.
- mdescAppro correspond à une référence sur un descripteur de mouvement de la base de données du contrôleur de robot 10. Il définit les paramètres cinématiques à utiliser pour la trajectoire d'approche s'étendant entre les points P'6 et P6.

Les paramètres Tdepart et Tappro renvoient à des transformations renseignées dans une table 154 de transformations de la base de données 15. Les paramètres mdescDepart et mdescAppro renvoient à des types de mouvements renseignés dans la table « MDESC » 153.

Les instructions de réalisation d'une trajectoire élaborées par le programmeur du PLC 6 et interprétées par le PLC 6 en ordres de trajectoire Om pour réaliser une opération comprenant des mouvements spécifiques de départ et d'approche peuvent s'écrire, par exemple en langage ST, de la façon suivante :

*MOVE (i, n, m, o, Tdepart, mdescDepart, Tappro, mdescAppro)*

Ces paramètres sont transmis de la même façon que les autres paramètres de la trajectoire, par des nouvelles sorties spécifiées dans le protocole d'échange.

Pour réaliser les mouvements de départ et d'approche, le programme serveur 30 calcule automatiquement les points supplémentaires P1' à insérer entre les points P1 et P2 et et P6' entre les points P5 et P6. Ces points supplémentaires sont calculés en appliquant la transformation géométrique respective Tdepart et Tappro aux premier et dernier points P1 et P6 de la trajectoire concernée. Pour ce type d'ordre de trajectoire Om qui inclut des mouvements spécifiques d'approche et de départ, le programme serveur 30 ajoute un mouvement linéaire ML1 en début de trajectoire vers le point de départ P'1 calculé avec les paramètres cinématiques mdescDepart et un mouvement linéaire ML6 depuis le point d'approche P'6 calculé en fin de trajectoire avec les paramètres cinématiques mdescAppro. En langage VAL 3, les séquences d'instructions contenant les instructions de mouvement élémentaires iME générées par l'unité de calcul 11 peuvent s'écrire de la façon suivante :

$$pointDepart = POINTS[n] \, [0]*depart$$

$$MOVEL \, (pointDepart \, , TOOLS[m], \, mdescDepart \,)$$

$$POUR \, index = 1 \, A \, NombreDeVariablesDans(POINTS[n])-1$$

$$MOVEL \, (POINTS[n] \, [index], \, TOOLS[m], \, MDESCS[o])$$

$$FIN\_POUR$$

$$pointAppro = POINTS[n] \, [NombreDeVariablesDans(POINTS[n])]*appro$$

$$MOVEL \, (pointAppro, TOOLS[m], \, MDESCS[o])$$

$$MOVEL \, (POINTS[n] \, [NombreDeVariablesDans(POINTS[n])], \, TOOLS[m], \, mdescAppro)$$

Selon un mode de réalisation non représenté de l'invention, le procédé de l'invention peut appliquer des mouvements particuliers seulement au départ du premier point P1, ou bien seulement à l'approche du dernier point P6.

Selon un autre aspect optionnel de l'invention, dans une application de « pick and place » il peut être avantageux d'anticiper la commande de l'outil 40 de manière que le temps de cycle ne soit pas pénalisé par le temps de réaction de l'outil 40. Cette opération de synchronisation peut être réalisée de façon efficace à partir du contrôleur de robot 10. Les contrôleurs de robot disposent en général de la possibilité de déclencher une action lorsque le bras de robot contrôlé atteint une position donnée.

Pour réaliser cette spécificité, des paramètres supplémentaires associés à une instruction de réalisation d'une trajectoire sont à disposition de l'installateur du PLC 6. Ces paramètres supplémentaires peuvent être définis de la manière suivante, par exemple dans le cas de l'application « pick and place » :

- ActionTrigger correspond à un pourcentage compris entre 0 et 100 d'avancée de la trajectoire qui relie le point d'approche P'6 au dernier point P6 de la trajectoire. Une valeur « 0 » ou « 100 » signifie respectivement que l'action est déclenchée sur le point d'approche P'6 ou sur le dernier point P6 de la trajectoire.
- OpenOrClose est une commande booléenne qui précise si l'action attendue est d'ouvrir ou de fermer l'outil 40, dans le cas où celui-ci est, par exemple, une pince permettant de saisir une pièce. En variante, cette commande peut être adaptée pour activer ou désactiver une fonctionnalité particulière de l'outil 40.

Ces paramètres sont entrés dans une instruction MOVE au niveau du PLC 6, à la suite des autres paramètres précédemment définis, de la façon suivante :

*MOVE (i, n, m, o, Tdépart, mdescDépart, Tappro, mdescAppro, ActionTrigger, OpenOrClose)*

dans laquelle ActionTrigger est une valeur, par exemple 50, si on souhaite la réalisation de l'action à 50% de l'avancée du mouvement, et OpenOrClose est une valeur booléenne telle que « TRUE » ou « FALSE » selon le souhait d'activation ou de désactivation de l'outil.

Pour réaliser cette fonctionnalité, l'état d'avancement de chaque mouvement commandé est observé. En effet toute commande de mouvement élémentaire correspondant à une instruction de mouvement élémentaire iME, par exemple de type « MOVE », renvoie un identificateur de mouvement, par exemple dans la variable « MotionID ». Le contrôleur de robot 10 peut être à tout instant interrogé pour connaitre l'état d'avancement d'un mouvement particulier. Par exemple, dans le langage VAL 3, la fonction « GetMotionProgress(MotionID) », dans laquelle « MotionID » correspond à l'identificateur d'un mouvement précis, permet de connaitre l'état d'avancement de ce mouvement, notamment sous la forme d'un pourcentage.

En outre, dans le langage VAL 3, des commandes appelées « Open() » et « Close() » qui prennent en paramètres des variables de type Tools permettent de piloter un outil défini de la table « TOOLS » 152, par exemple d'ouvrir ou de fermer une pince.

Pour la réalisation de cette fonctionnalité, le programme serveur 30 de l'unité de calcul 11 fait l'acquisition de l'identificateur du mouvement d'approche ML6 et le mémorise par exemple dans la variable « ApproID ». Dans ce but, les séquences d'instructions contenant les instructions de mouvement élémentaires iME peuvent être modifiées de la manière suivante:

*pointDepart= POINTS[n] [0]\*depart*

*MOVE (pointDepart ,TOOLS[m], mdescDepart )*

*POUR index = 1 A NombreDeVariablesDans(POINTS[n])-1*

*MOVE (POINTS[n] [index], TOOLS[m], MDESCS[o])*

*FIN_POUR*

*pointAppro= POINTS[n] [NombreDeVariablesDans(POINTS[n])]\*appro*

*MOVE (pointAppro,TOOLS[m], MDESCS[o])*

*ApproID=MOVE      (POINTS[n]      [NombreDeVariablesDans(POINTS[n])],TOOLS[m], mdescAppro)*

D'autre part, une tâche parallèle est lancée sur l'unité de calcul 11, qui consiste à observer l'avancée du mouvement dont l'identificateur a été acquis, et à déclencher une action prédéterminée quand l'avancée du mouvement atteint la valeur spécifiée dans le paramètre « ActionTrigger ». Les instructions de la tâche parallèle pour le déclenchement de l'action peuvent être écrites de la façon suivante, en langage VAL 3:

```
Forever
      Wait GetMotionProgress(ApproID)==ActionTrigger
            If OpenOrClose == TRUE
```

```
            Open(TOOLS[m],)
     else
            Close(TOOLS[m],)
   EndWait
EndForever
```

Le procédé de l'invention est préférentiellement, mais pas exclusivement, mis en oeuvre à l'aide de l'interfaçage Ethercat. Il requiert essentiellement un moyen de communication, qui peut être d'un autre type que le bus de terrain Ethercat. Par exemple, le procédé de l'invention peut être mis en oeuvre avec un bus MODBUS.

Dans son mode de réalisation préférentiel, l'invention prévoit que les données de la trajectoire sont transmises par référence à des paramètres enregistrés dans la mémoire du contrôleur de robot 10 dans l'ordre de trajectoire Om. En variante, les données de trajectoire peuvent également être transmises par valeur, c'est-à-dire en définissant, dans les instructions de mouvement crées par le programmeur du PLC 6, des coordonnées de points, des vitesses, ou d'autres paramètres. Par exemple, les deux points d'une trajectoire peuvent être directement saisis par leurs coordonnées dans une instruction MOVE. En particulier, les données correspondant au déclenchement anticipé de la commande d'outil peuvent être avantageusement transmises par valeur puisque leur mise au point s'effectue sur la base de l'exécution de l'application 20 dans le PLC 6.

De même, l'invention s'appuie sur une transmission des ordres de trajectoire suivant un protocole basé sur des tables d'entrées/sorties. Elle peut être mise en oeuvre en utilisant une transmission qui s'appuie sur une architecture client/serveur instaurant l'envoi et la réception de messages contenant les ordres de trajectoire.

Les caractéristiques des modes de réalisation et variantes décrits ci-dessus peuvent être combinées pour former de nouveaux modes de réalisation de l'invention.

**Revendications**

1. Procédé de commande d'une cellule de travail automatisée (2) comportant :

   - au moins un bras de robot (4) avec au moins trois degrés de liberté (A1-A6),
   - un contrôleur logique programmable (6) adapté pour élaborer un ordre de trajectoire (Om) sur la base d'une instruction de réalisation d'une trajectoire d'une application (20) programmée dans le contrôleur logique programmable,
   - un contrôleur de robot (10), adapté pour piloter le mouvement du bras de robot (4), et
   - un bus de communication (5) entre le contrôleur logique programmable (6) et le contrôleur de robot (10),

   **caractérisé en ce qu'**il comprend les étapes suivantes :

   a) élaborer, dans le contrôleur logique programmable (6), un ordre de trajectoire (Om) comportant des paramètres de réalisation d'une trajectoire définie au moins entre un point de départ (P1) et un point d'arrivée (P6);
   b) transmettre l'ordre de trajectoire (Om) élaboré à l'étape a) à une unité de calcul (11) du contrôleur de robot (10);
   c) élaborer, dans l'unité de calcul (11) du contrôleur de robot (10) et sur la base de l'ordre de trajectoire (Om) transmis à l'étape b), des instructions de mouvement élémentaires (iME) pour le pilotage du bras de robot (4) sur la trajectoire définie par l'ordre de trajectoire (Om).

2. Procédé de commande selon la revendication 1, **caractérisé en ce que** dans l'ordre de trajectoire (Om) élaboré à l'étape a), la trajectoire est définie par une référence à un ensemble (POINTS) de points prédéfinis enregistrés dans une mémoire (151) du contrôleur de robot (10), cette référence étant renseignée dans une variable (n) contenue dans l'ordre de trajectoire (Om).

3. Procédé de commande selon l'une des revendications précédentes, **caractérisé en ce que** dans l'ordre de trajectoire (Om) élaboré à l'étape a), des paramètres cinématiques à utiliser pour la réalisation de la trajectoire sont définis.

4. Procédé de commande selon la revendication 3, **caractérisé en ce que** les paramètres cinématiques à utiliser pour la réalisation de la trajectoire sont définis par une référence à des paramètres cinématiques (MDESCS) enregistrés dans une mémoire (153) du contrôleur de robot (10) et renseignés dans une variable (k) contenue dans l'ordre de trajectoire (Om).

5. Procédé de commande selon l'une des revendications précédentes, **caractérisé en ce que** dans l'ordre de trajectoire (Om) élaboré à l'étape a), des paramètres de départ du premier point (P1) de la trajectoire et/ou d'approche du dernier point (P6) de la trajectoire, qui sont mis en oeuvre par le contrôleur de robot (10) dans la réalisation de la trajectoire, sont définis.

6. Procédé de commande selon la revendication 5, **caractérisé en ce que** les paramètres de départ du premier point (P1) de la trajectoire et/ou d'approche du dernier point (P6) de la trajectoire sont définis par une référence à des paramètres de départ et d'approche enregistrés dans une mémoire (15) du contrôleur de robot (10) et renseignés dans des variables (Tdepart, mdescDepart, Tappro, mdescAppro) contenues dans l'ordre de trajectoire (Om).

7. Procédé de commande selon l'une des revendications précédentes, **caractérisé en ce que** l'ordre de trajectoire (Om) élaboré à l'étape a) comprend des actions à réaliser par un outil (40) équipant une extrémité du bras de robot (4).

8. Procédé de commande selon l'une des revendications précédentes, **caractérisé en ce que** dans l'ordre de trajectoire (Om) élaboré à l'étape a), la géométrie de l'outil (40) à utiliser est définie.

9. Procédé de commande selon la revendication 8, **caractérisé en ce que** la géométrie de l'outil (40) à utiliser est définie par une référence à une géométrie d'outil prédéfinie (TOOLS) enregistrée dans une mémoire (152) du contrôleur de robot (10), cette référence étant renseignée dans une variable (m) contenue dans l'ordre de trajectoire (Om).

10. Procédé de commande selon l'une des revendications précédentes, **caractérisé en ce que** l'ordre de trajectoire (Om) élaboré à l'étape a) comprend des actions à réaliser par un outil (40) équipant une extrémité du bras de robot (4), et **en ce que** le déclenchement d'une action de l'outil (40) par le contrôleur de robot (10) et des conditions de déclenchement de cette action sont renseignés dans une variable contenue dans l'ordre de trajectoire (Om).

11. Procédé de commande selon la revendication 10, **caractérisé en ce que** les conditions de déclenchement de l'action de l'outil (40) consistent à observer l'état d'avancée d'un mouvement du bras de robot (4) et à déclencher l'action de l'outil (40) lorsque l'état d'avancée du mouvement atteint une valeur prédéfinie.

12. Procédé de commande selon l'une des revendications précédentes, **caractérisé en ce qu'**à l'étape a), le contrôleur logique programmable (6) met à jour des entrées/sorties (22) de ce contrôleur logique programmable en fonction des paramètres de réalisation de la trajectoire suivant un protocole d'échange défini, et **en ce qu'**à l'étape b), l'unité de calcul (11) du contrôleur de robot (10) lit des entrées/sorties (28) de l'unité de calcul qui correspondent aux entrées/sorties (22) du contrôleur logique programmable dans le cadre de ce protocole d'échange.

FIG.1

FIG.2

FIG.3

FIG.4

Europäisches
Patentamt

European
Patent Office

Office européen
des brevets

## RAPPORT DE RECHERCHE EUROPEENNE

Numéro de la demande

EP 16 17 6906

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | WO 2012/097834 A2 (ABB AG [DE]; BECKER OLIVER [DE]; RUEDELE HARTMUT [DE]; DAI FAN [DE]) 26 juillet 2012 (2012-07-26)<br>* page 1 - page 3 *<br>* page 7 - page 8 *<br>----- | 1-12 | INV.<br>B25J9/16 |
| A | ANONYMOUS: "TECHNICAL PAPER PLCOPEN -TECHNICAL COMMITTEE 2 - TASK FORCE FUNCTION BLOCKS FOR MOTION CONTROL : PART 4-COORDINATED MOTION",<br>PLCOPEN NEWSLETTER, XX, XX,<br>3 décembre 2008 (2008-12-03), pages 1-119, XP003035576,<br>* page 8 - page 12 *<br>* page 17 - page 18 *<br>* page 56 - page 63 *<br>* page 80 - page 93 *<br>----- | 1-12 | |
| A | MARCELLO BONFE ET AL: "PLC-based control of a robot manipulator with closed kinematic chain",<br>2009 IEEE INTERNATIONAL CONFERENCE ON ROBOTICS AND AUTOMATION : (ICRA) ; KOBE, JAPAN, 12 - 17 MAY 2009, IEEE, PISCATAWAY, NJ, USA,<br>12 mai 2009 (2009-05-12), pages 1262-1267, XP031509515,<br>ISBN: 978-1-4244-2788-8<br>* le document en entier *<br>----- | 1-12 | DOMAINES TECHNIQUES RECHERCHES (IPC)<br><br>B25J<br>G05B |

Le présent rapport a été établi pour toutes les revendications

| Lieu de la recherche | Date d'achèvement de la recherche | Examinateur |
|---|---|---|
| La Haye | 9 novembre 2016 | Bassi, Luca |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 17 6906

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-11-2016

| Document brevet cité au rapport de recherche | Date de publication | Membre(s) de la famille de brevet(s) | Date de publication |
|---|---|---|---|
| WO 2012097834 A2 | 26-07-2012 | CN 103429399 A<br>EP 2665585 A2<br>WO 2012097834 A2 | 04-12-2013<br>27-11-2013<br>26-07-2012 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- WO 2012097834 A
- JP 2011062798 A